(19) Europäisches Patentamt
European Patent Office
Office européen des brevets

(11) EP 4 596 623 A1

(12) **EUROPEAN PATENT APPLICATION**
published in accordance with Art. 153(4) EPC

(43) Date of publication:
**06.08.2025 Bulletin 2025/32**

(21) Application number: **23872275.5**

(22) Date of filing: **25.09.2023**

(51) International Patent Classification (IPC):
***C08L 33/06*** *(2006.01)* ***C08K 5/00*** *(2006.01)*
***G01S 7/03*** *(2006.01)*

(52) Cooperative Patent Classification (CPC):
**C08K 5/00; C08L 33/06; G01S 7/03**

(86) International application number:
**PCT/JP2023/034773**

(87) International publication number:
**WO 2024/071052 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.09.2022 JP 2022152894**

(71) Applicant: **Kuraray Co., Ltd.**
**Kurashiki-shi, Okayama 710-0801 (JP)**

(72) Inventors:
- **IDEI, Hiroaki**
**Tokyo 100-0004 (JP)**
- **NOMOTO, Yusaku**
**Tainai-shi, Niigata 959-2691 (JP)**
- **NAKAMURA, Kimitoshi**
**Tainai-shi, Niigata 959-2691 (JP)**
- **TAMURA, Hidetaka**
**Tsukuba-shi, Ibaraki 305-0841 (JP)**
- **TAKAHASHI, Tomohiro**
**Tsukuba-shi, Ibaraki 305-0841 (JP)**

(74) Representative: **Müller-Boré & Partner Patentanwälte PartG mbB**
**Friedenheimer Brücke 21**
**80639 München (DE)**

# (54) ACRYLIC RESIN COMPOSITION FOR SENSOR PROTECTION COVERS

(57) An acrylic resin composition for sensor protection covers, comprising:
an acrylic resin (A); and
a light absorber (B),
wherein
the acrylic resin composition has a deflection temperature under load of 110°C or more, and
a 1 mm thick molded article comprising the acrylic resin composition has optical properties that satisfy all of the following conditions (i) to (v):
(i) a maximum transmittance of 10% or less when light with a wavelength of 380 nm to 700 nm is incident on the molded article at an incident angle of 0°;
(ii) a minimum transmittance of 85% or more when light with a wavelength of 850 nm to 950 nm is incident on the molded article at an incident angle of 0°;
(iii) an average transmittance of 85% or more when light with a wavelength of 1500 nm to 1600 nm is incident on the molded article at an incident angle of 0°;
(iv) 0.9≤(transmittance when light with a wavelength of 900 nm is incident on the molded article at an incident angle of 60°)/(transmittance when light with a wavelength of 900 nm is incident on the molded article at an incident angle of 0°)≤1.1; and
(v) 0.9≤(transmittance when light with a wavelength of 1550 nm is incident on the molded article at an incident angle of 60°)/(transmittance when light with a wavelength of 1550 nm is incident on the molded article at an incident angle of 0°)≤1.1.

EP 4 596 623 A1

## Description

### Technical Field

The present invention relates to an acrylic resin composition for sensor protection covers.

### Background Art

In recent years, optical sensors have been developed for various uses, and in particular, use of optical sensors using infrared rays has been considered. Since infrared rays have a longer wavelength than visible light and thus have the advantage of being less likely to scatter, they are used for distance measurement, three-dimensional measurement, face recognition, etc. In optical sensors that use near-infrared rays, an infrared transmission filter, which blocks visible light and transmits infrared rays, is applied to further improve near-infrared sensitivity, and in automotive applications, such optical sensors are used in driver monitoring systems, which identify the driver's condition and alert the driver, and LiDAR (light detection and ranging) for achieving autonomous driving.
LiDAR for self-driving cars uses near-infrared lasers with wavelengths of 905 nm and 1550 **nm,** and these wavelengths are less likely to become scattered in the atmosphere and can easily propagate over long distances. In addition, use of infrared lasers with wavelengths of 1064 nm and 1310 **nm,** which are used in existing measurement, in LiDAR has been considered.
As a means for blocking visible light and transmitting near-infrared rays of a specific wavelength, a bandpass filter in which a high-refractive index material and a low-refractive index material are alternately laminated on a glass substrate is disclosed (Patent Literature (PTL) 1). However, the optical properties of such an optical filter in which a multilayer thin film is formed vary greatly depending on the angle of incidence of incident light.
Devices are increasingly becoming reduced in size and thickness, and the distance from the light entrance window to the optical sensor thus becomes shorter than before, whereby the proportion of light incident from an oblique direction tends to increase more than before. To improve sensor accuracy, it is required that the amount of transmission of even light incident from an oblique direction, reaching an optical sensor, remain unchanged.
A filter containing a coloring pigment (PTL 2) is known as an optical filter capable of blocking visible light regardless of the incident angle. However, in the case of polycarbonate resin, surface hardness is insufficient, and scratch resistance is insufficient. In the case of acrylic resin, usually, heat resistance is insufficient, and dimensional stability at high temperatures, such as inside automobiles, is insufficient.

### Citation List

#### Patent Literature

PTL 1: JP2015-184627A
PTL 2: JPS60-139757A

### Summary of Invention

#### Technical Problem

An object of the present invention is to provide an acrylic resin composition for sensor protection covers that has high scratch resistance and high dimensional stability and that can achieve both excellent visible light blocking properties and excellent near-infrared transmission properties at a specific wavelength even when the incident angle is increased due to the downsizing of apparatuses in which an optical sensor device is provided.

#### Solution to Problem

The present inventors conducted extensive research to achieve the above object and found that the object of the present invention can be achieved by an acrylic resin composition containing an acrylic resin and a light absorber, the acrylic resin composition having a deflection temperature under load of 110°C or more, and the optical properties of a molded article of the acrylic resin composition satisfying specific conditions. The present invention has thus been accomplished.
Specifically, the present invention provides the following items [1] to [8].

[1] An acrylic resin composition for sensor protection covers, comprising:

an acrylic resin (A); and
a light absorber (B),
wherein
the acrylic resin composition has a deflection temperature under load of 110°C or more, and
a 1 mm thick molded article comprising the acrylic resin composition has optical properties that satisfy all of the following conditions (i) to (v):

(i) a maximum transmittance of 10% or less when light with a wavelength of 380 nm to 700 nm is incident on the molded article at an incident angle of 0°;
(ii) a minimum transmittance of 85% or more when light with a wavelength of 850 nm to 950 nm is incident on the molded article at an incident angle of 0°;
(iii) an average transmittance of 85% or more when light with a wavelength of 1500 nm to 1600 nm is incident on the molded article at an incident angle of 0°;
(iv) 0.9≤(transmittance when light with a wavelength of 900 nm is incident on the molded article at an incident angle of 60°)/(transmittance when light with a wavelength of 900 nm is incident on the molded article at an incident angle of 0°)≤1.1; and
(v) 0.9≤(transmittance when light with a wavelength of 1550 nm is incident on the molded article at an incident angle of 60°)/(transmittance when light with a wavelength of 1550 nm is incident on the molded article at an incident angle of 0°)≤1.1.

[2] The acrylic resin composition according to [1], wherein when the acrylic resin composition is formed into a 3 mm thick molded article, the surface hardness of the molded article is 70 or more in terms of Rockwell hardness.
[3] The acrylic resin composition according to [1] or [2], wherein the amount of the light absorber (B) is 0.01 mass% or more and 5 mass% or less based on the entire resin composition.
[4] The resin composition according to any one of [1] to [3], wherein the light absorber (B) is an anthraquinone dye.
[5] The acrylic resin composition according to any one of [1] to [4], wherein the acrylic resin (A) comprises an acrylic resin having a triad syndiotacticity (rr) of 70% or more.
[6] The acrylic resin composition according to any one of [1] to [5], wherein the acrylic resin (A) comprises a structural unit (R) having in its main chain at least one cyclic structure selected from the group consisting of an N-substituted or unsubstituted glutarimide unit, a glutaric anhydride unit, a maleimide unit, and a lactone unit.
[7] A molded article comprising the acrylic resin composition according to any one of [1] to [6].
[8] The molded article according to [7], which is a sensor protection cover.

Advantageous Effects of Invention

The present invention provides an acrylic resin composition for sensor protection covers that has excellent visible light blocking properties and excellent near-infrared transmission properties at a specific wavelength, has a small dependence of transmittance on the incident angle, and has high scratch resistance and high dimensional stability.

Description of Embodiments

Acrylic Resin Composition

The acrylic resin composition of the present invention comprises an acrylic resin (A) and a light absorber (B).

Acrylic Resin (A)

The acrylic resin (A) comprises a structural unit derived from methyl methacrylate in an amount of preferably 25 mass% or more, more preferably 65 mass% or more, even more preferably 90 mass% or more, particularly preferably 99 mass% or more, and most preferably 100 mass%, based on the total monomer units. When the acrylic resin (A) comprises 25 mass% or more of the structural unit derived from methyl methacrylate, the surface hardness of a molded article comprising the acrylic resin composition of the present invention can be increased. The content of the structural unit derived from methyl methacrylate in the acrylic resin (A) can be determined by subjecting the acrylic resin (A) purified by reprecipitation in methanol to pyrolysis gas chromatography to perform pyrolysis and separation of volatile components,

and calculating the content from the ratio of the obtained peak area of methyl methacrylate to that of the copolymerized components.

The acrylic resin (A) may be composed of an acrylic resin having a triad syndiotacticity (rr) of 70% or more, or an acrylic resin comprising a structural unit derived from methyl methacrylate and a structural unit (R).

In a first embodiment, the acrylic resin (A) has a triad syndiotacticity (rr) of preferably 70% or more, more preferably 70 to 90%, and even more preferably 70 to 80%. Such a syndiotacticity of 70% or more can increase the glass transition temperature of the resin composition of the present invention. In addition, when the syndiotacticity is 70% or more, a molded article having a high surface hardness can be obtained.

The triad syndiotacticity (rr) as used herein (sometimes simply referred to below as "syndiotacticity (rr)") is a percentage at which two pairs of adjacent structural units (diads) of three successive structural units (a triad) are both racemo diads (expressed as "rr"). When two adjacent structural units (a diad) in a polymer molecule have the same configuration, the diad is referred to as "meso." When they have the opposite configuration, the diad is referred to as "racemo." Meso and racemo are respectively referred to as "m" and "r."

The triad syndiotacticity (rr) (%) can be calculated by measuring a $^1$H-NMR spectrum in deuterated chloroform at 30°C; measuring, from the spectrum, an area (X) of the region from 0.6 to 0.95 ppm and an area (Y) of the region from 0.6 to 1.35 ppm, with the peak of TMS being taken as 0 ppm; and making a calculation using the formula $(X/Y) \times 100$. When two or more acrylic resins (A) with different rr are used in combination, rr can be determined according to the additivity rule based on the mass ratio.

In a second embodiment, the acrylic resin (A) comprises a structural unit derived from methyl methacrylate and a structural unit (R).

The structural unit (R) is a structural unit having in its main chain at least one cyclic structure selected from the group consisting of an N-substituted or unsubstituted glutarimide unit, a glutaric anhydride unit, a maleimide unit, and a lactone unit. The structural units (R) may be used singly or in a combination of two or more.

The N-substituted or unsubstituted glutarimide unit is a unit having an N-substituted or unsubstituted 2,6-dioxopiperidinediyl structure.

Examples of the unit having an N-substituted or unsubstituted 2,6-dioxopiperidinediyl structure include a structural unit represented by formula (I):

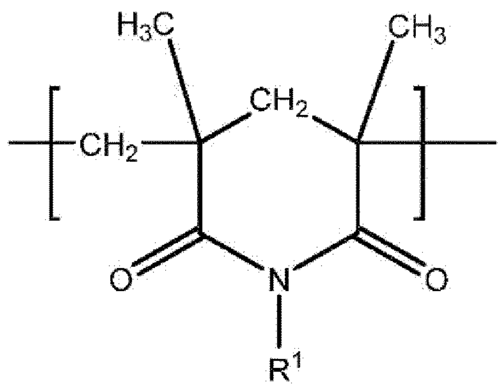

(I)

wherein $R^1$ is a hydrogen atom, $C_1$-$C_{18}$ alkyl, $C_3$-$C_{12}$ cycloalkyl, or a $C_6$-$C_{15}$ organic group containing an aromatic ring, preferably a hydrogen atom, methyl, n-butyl, cyclohexyl, phenyl, or benzyl, and more preferably methyl, n-butyl, or cyclohexyl.

The unit having an N-substituted or unsubstituted 2,6-dioxopiperidinediyl structure is preferably a structural unit represented by formula (Ia).

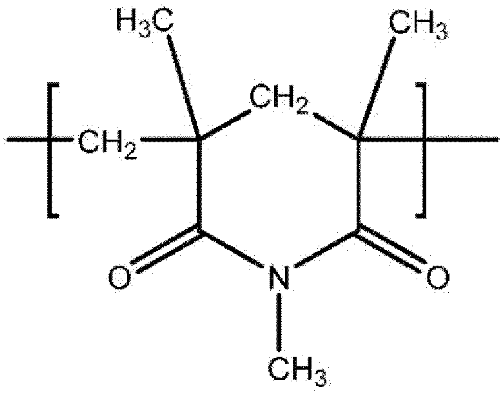

(Ia)

The N-substituted or unsubstituted glutarimide unit can be obtained by the method described in WO2005/10838A1, JP2010-254742A, JP2008-273140A, JP2008-274187A, or the like, specifically, for example, by a method comprising reacting two adjacent structural units derived from methyl methacrylate with, for example, an aliphatic hydrocarbon group-containing amine, such as ammonia, methylamine, ethylamine, n-propylamine, isopropylamine, n-butylamine, isobutylamine, tert-butylamine, or n-hexylamine; an aromatic hydrocarbon group-containing amine, such as aniline, toluidine, or trichloroaniline; an alicyclic hydrocarbon group-containing amine, such as cyclohexylamine; urea, 1,3-dimethylurea, 1,3-diethylurea, or 1,3-dipropylurea. Among these, methylamine is preferred.

The glutaric anhydride unit is a unit having a 2,6-dioxodihydropyrandiyl structure. The unit having a 2,6-dioxodihydropyrandiyl structure is preferably a structural unit represented by formula (II).

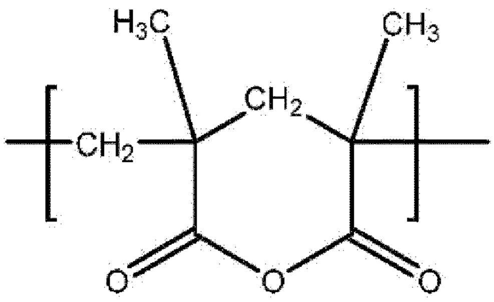

(II)

The unit having a 2,6-dioxodihydropyrandiyl structure can be incorporated into the acrylic resin (A) by the method described in JP2007-197703A, JP2010-96919A, or the like, for example, by intramolecular cyclization of two adjacent structural units derived from methacrylic acid or intramolecular cyclization of a structural unit derived from methacrylic acid and a structural unit derived from methyl methacrylate.

The maleimide unit is a unit having an N-substituted or unsubstituted 2,5-pyrrolidinedione structure.

Examples of the unit having an N-substituted or unsubstituted 2,5-pyrrolidinedione structure include a structural unit represented by formula (III):

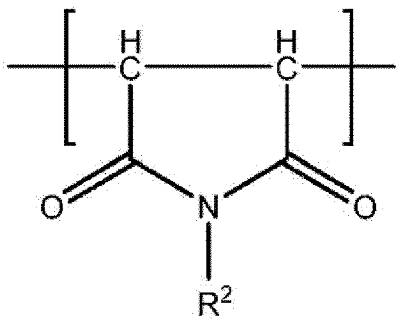

(III)

wherein $R^2$ is a hydrogen atom, $C_1$-$C_{18}$ alkyl, $C_3$-$C_{12}$ cycloalkyl, or a $C_6$-$C_{15}$ organic group containing an aromatic ring, preferably a hydrogen atom, methyl, n-butyl, cyclohexyl, phenyl, or benzyl, and more preferably methyl, n-butyl, or cyclohexyl.

The structural unit represented by (III) is produced by a reaction of maleic anhydride (m) with an imidizing agent

represented by $R^2NH_2$.

The N-substituted or unsubstituted maleimide unit can be obtained by the method described in JPS61-026924B, JPH7-042332B, JPH9-100322A, JP2001-329021A, or the like, specifically, by reacting a maleic anhydride unit with an imidizing agent, for example, an aliphatic hydrocarbon group-containing amine, such as ammonia, methylamine, ethylamine, n-propylamine, isopropylamine, n-butylamine, isobutylamine, tert-butylamine, or n-hexylamine; an aromatic hydrocarbon group-containing amine, such as aniline, toluidine, or trichloroaniline; an alicyclic hydrocarbon group-containing amine, such as cyclohexylamine; urea, 1,3-dimethylurea, 1,3-diethylurea, or 1,3-dipropylurea. Among these, methylamine is preferred.

The lactone unit is a structural unit containing a >CH-O-C(=O)- group in the cyclic structure. In the structural unit containing a >CH-O-C(=O)- group in the cyclic structure, the number of ring-constituting elements is preferably 4 to 8, more preferably 5 to 6, and most preferably 6. Examples of the structural unit containing a >CH-O-C(=O)- group in the cyclic structure include lactonediyl structural units, such as β-propiolactonediyl structural units, γ-butyrolactonediyl structural units, and δ-valerolactonediyl structural units. The structural unit containing a >CH-O-C(=O)- group in the cyclic structure can be obtained, for example, by intramolecular cyclization of a polymer having a hydroxy group and an ester group with a hydroxy group and an ester group. ">C" in the formula means that the carbon atom C has two bonding hands.

Examples of δ-valerolactonediyl structural units include a structural unit represented by formula (IV):

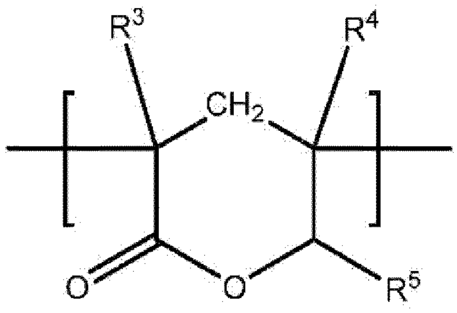

(IV)

wherein $R^3$, $R^4$, and $R^5$ are each independently a hydrogen atom or a $C_1$-$C_{20}$ organic group, preferably a hydrogen atom or a $C_1$-$C_{10}$ organic group, and more preferably a hydrogen atom or a $C_1$-$C_5$ organic group. The organic group is not particularly limited as long as the organic group contains 1 to 20 carbon atoms. Examples include linear or branched alkyl groups, linear or branched aryl groups, $-OCOCH_3$, -CN, and the like. The organic group may contain a heteroatom, such as an oxygen atom. $R^3$ and $R^4$ are preferably methyl, and $R^5$ is preferably a hydrogen atom.

The lactone unit can be incorporated into the methacrylic copolymer by the method described in JP2000-230016A, JP2001-151814A, JP2002-120326A, JP2002-254544A, JP2005-146084A, or the like, for example, by intramolecular cyclization of a structural unit derived from 2-(hydroxyalkyl)acrylate and a structural unit derived from methyl (meth)acrylate.

The acrylic resin (A) contains the structural unit (R) in an amount of preferably 1 to 60 mass%, more preferably 2 to 55 mass%, and even more preferably 3 to 50 mass%, based on the total structural units. The heat resistance and rigidity of the acrylic resin (A) can be changed by changing the proportion of the structural unit (R). A structural unit (R) content of 1 mass% or more is preferred because it improves the heat resistance and rigidity of the acrylic resin (A). A structural unit (R) content of 60 mass% or less is preferred from the viewpoint of enhancing flexibility to improve molding processability and achieving good transmittance without excessive absorption components in the near-infrared region.

The acrylic resin (A) may contain a structural unit (O) in addition to the structural unit (R). The proportion of the structural unit (O) in the acrylic resin (A) is preferably 30 mass% or less, and more preferably 25 mass% or less, based on the total structural units. The proportions of the structural unit (R) and the structural unit (O) can be measured by $^1$H-NMR or the like.

Examples of structural units (O) include structural units derived from methacrylic acid alkyl esters other than methyl methacrylate, such as ethyl methacrylate and butyl methacrylate; methacrylic acid aryl esters, such as phenyl methacrylate; methacrylic acid cycloalkyl esters, such as cyclohexyl methacrylate and norbornenyl methacrylate; acrylic acid alkyl esters, such as methyl acrylate, ethyl acrylate, propyl acrylate, butyl acrylate, and 2-ethylhexyl acrylate; acrylic acid aryl esters, such as phenyl acrylate; acrylic acid cycloalkyl esters, such as cyclohexyl acrylate and norbornenyl acrylate; aromatic vinyl compounds, such as styrene and α-methylstyrene; acrylic acid; methacrylic acid; acrylamide; methacrylamide; acrylonitrile; methacrylonitrile; and like vinyl monomers having only one polymerizable carbon-carbon double bond in one molecule. These may be used singly or in a combination of two or more.

The weight average molecular weight (Mw) of the acrylic resin (A) is preferably 30,000 to 150,000, more preferably 40,000 to 120,000, and even more preferably 50,000 to 100,000. When the Mw is equal to or greater than the lower limit, the impact resistance and toughness of a molded article obtained from the resin composition tend to be

improved. When the Mw is equal to or less than the upper limit, the fluidity of the resin composition tends to be improved, and accordingly, the molding processability tends to be improved.

In the acrylic resin (A), the lower limit of the ratio of Mw to the number average molecular weight (the number average molecular weight is referred to below as "Mn") (Mw/Mn: this value is referred to below as "molecular weight distribution") is preferably 1.01, more preferably 1.02, and even more preferably 1.03, and the upper limit of the ratio is preferably **2.5,** more preferably **2.4,** and even more preferably **2.3.** When Mw/Mn is within this range, the acrylic resin (A) has excellent mechanical strength. Mw and Mn can be controlled by adjusting the type, amount, and time of addition of a polymerization initiator, a chain transfer agent, etc. used in production. The number average molecular weight Mn and the weight average molecular weight Mw are values calculated by converting a chromatogram measured by gel permeation chromatography into the corresponding molecular weight of standard polymethyl methacrylate.

In the molecular weight distribution measured by gel permeation chromatography, the proportion of the acrylic resin (A) having a molecular weight of less than 15000 is preferably 10 mass% or less, more preferably 5 mass% or less, and even more preferably 2 mass% or less. The smaller the proportion of the acrylic resin (A) having a molecular weight of less than 15000, the higher the mechanical strength tends to be.

The glass transition temperature of the acrylic resin (A) is 120°C or more, preferably 125°C or more, and more preferably 128°C or more. The upper limit of the glass transition temperature of the acrylic resin (A) is preferably 160°C. The glass transition temperature can be controlled by adjusting the molecular weight, syndiotacticity (rr), introduction of a cyclic structure, or the like. As the glass transition temperature of the acrylic resin (A) increases, the deflection temperature under load of the resulting resin composition increases, and a molded article of the resin composition is less likely to undergo deformation, such as thermal shrinkage. All glass transition temperatures mentioned in the present invention are glass transition temperatures at the midpoint measured by a method described in the Examples.

The amount of the acrylic resin (A) contained in the resin composition of the present invention is preferably 50 to 99.9 mass%, more preferably 60 to 99.8 mass%, and even more preferably 70 to 99.7 mass%. An amount of the acrylic resin (A) of 50 mass% or more is preferred because the heat resistance is improved.

One type of acrylic resin (A) may be incorporated into the resin composition, or two or more types of acrylic resins (A) may be incorporated into the resin composition in combination.

Method for Producing Acrylic Resin (A)

The polymerization method for the acrylic resin (A) is not particularly limited. The acrylic resin (A) can be obtained by polymerizing methyl methacrylate alone, or methyl methacrylate, a copolymerizable monomer for forming the structural unit (O), etc., and, as necessary, further performing a cyclic structure-forming reaction.

In the first embodiment, from the viewpoint of high productivity, high thermal decomposition resistance, less foreign matter, less dimers and trimers of methyl methacrylate, and excellent appearance of a molded article, the acrylic resin (A) is preferably produced by adjusting the polymerization temperature, the polymerization time, the type and amount of chain transfer agent, the type and amount of polymerization initiator, etc. in an anionic polymerization method.

Examples of the anionic polymerization method include a method comprising performing anionic polymerization in the presence of a mineral acid salt, such as an alkali metal or alkaline earth metal salt using an organic alkali metal compound as a polymerization initiator (see JPH7-25859B), a method comprising performing anionic polymerization in the presence of an organoaluminum compound using an organic alkali metal compound as a polymerization initiator (see JPH11-335432A), a method comprising performing anionic polymerization using an organic rare earth metal complex as a polymerization initiator (see JPH6-93060A), and the like.

In the anionic polymerization method for producing the acrylic resin (A), it is preferable to use an alkyllithium, such as n-butyllithium, sec-butyllithium, isobutyllithium, or tert-butyllithium, as a polymerization initiator. From the viewpoint of productivity, it is preferred that the anionic polymerization method is performed in the presence of an organoaluminum compound.

Examples of organoaluminum compounds include compounds represented by $AlR_1R_2R_3$, wherein $R_1$, $R_2$, and $R_3$ are each independently optionally substituted alkyl, optionally substituted cycloalkyl, optionally substituted aryl, optionally substituted aralkyl, optionally substituted alkoxyl, optionally substituted aryloxy, or N,N-disubstituted amino; and further, $R_2$ and $R_3$ may be bonded to each other to form optionally substituted arylenedioxy.

Specific examples of organoaluminum compounds include isobutylbis(2,6-di-tert-butyl-4-methylphenoxy)aluminum, isobutylbis(2,6-di-tert-butylphenoxy)aluminum, isobutyl[2,2'-methylenebis(4-methyl-6-tert-butylphenoxy)]aluminum, and the like.

In the anionic polymerization method, an ether, a nitrogen-containing compound, or the like may be present in order to control the polymerization reaction.

In the second embodiment, in which the acrylic resin (A) contains a structural unit (R) having in its main chain at least one cyclic structure selected from the group consisting of an N-substituted or unsubstituted glutarimide unit, a glutaric anhydride unit, a maleimide unit, and a lactone unit, the acrylic resin (A) can be obtained, for example, by a method

including performing a cyclic structure-forming reaction.

Specifically, the method for producing the acrylic resin (A) includes the following steps: continuously supplying a reactant to a tank reactor, the reactant comprising a monomer mixture and a radical polymerization initiator optionally with a chain transfer agent or the like, the monomer mixture containing, for example, 70 to 100 mass% of methyl methacrylate and 0 to 30 mass% of a copolymerizable monomer for forming the structural unit (O); subjecting the monomer mixture to bulk polymerization in the tank reactor until a polymerization conversion rate of 30 to 60 mass% is achieved to obtain a reaction product; removing the monomer mixture in the reaction product to obtain a precursor polymer; and subjecting the obtained precursor polymer to a cyclic structure-forming reaction. Each step can be carried out by a known technique.

The cyclic structure-forming reaction can be performed, for example, using an extruder. Examples of extruders include single-screw extruders, twin-screw extruders, multi-screw extruders, and the like. Twin-screw extruders are preferred from the viewpoint of mixing performance. Examples of twin-screw extruders include non-intermeshing co-rotating extruders, intermeshing co-rotating extruders, non-intermeshing counter-rotating extruders, and intermeshing counter-rotating extruders. The intermeshing co-rotating extruder is preferable because highspeed rotation is possible and mixing can proceed efficiently. These extruders may be used alone or connected in series.

When the structural unit (R) is an N-substituted or unsubstituted glutarimide unit, in the cyclic structure-forming reaction using an extruder, for example, the precursor polymer as a starting material is fed from a starting material feeding section of the extruder, the precursor polymer is melted to fill the inside of a cylinder, and an imidizing agent etc. are injected into the extruder using an addition pump, and so the cyclic structure-forming reaction can be allowed to proceed in the extruder.

The resin temperature in the reaction zone in the extruder is preferably set in the range of 180 to 300°C, and more preferably in the range of 200 to 290°C. When the resin temperature in the reaction zone is less than 180°C, the reaction efficiency of the cyclic structure-forming reaction is low, and the heat resistance of the acrylic resin (A) tends to decrease. When the resin temperature in the reaction zone exceeds 300°C, resin decomposition becomes significant. The "reaction zone" in the extruder refers to a region from an injection position for injecting an imidizing agent or the like to a resin discharge port (die portion) in the cylinder of the extruder.

The cyclic structure-forming reaction can be allowed to further proceed by increasing the reaction time in the reaction zone of the extruder. The reaction time in the reaction zone of the extruder is preferably 10 seconds or more, more preferably 30 seconds or more. A reaction time of 10 seconds or more is preferred because the cyclic structure-forming reaction proceeds well.

The resin pressure in the extruder is preferably in the range of atmospheric pressure to 50 MPa, and more preferably in the range of 1 to 30 MPa. A pressure of 50 MPa or less falls within the range of the mechanical pressure resistance of an ordinary extruder and does not require a special device, which is cost-effective.

For the cyclic structure-forming reaction, it is preferable to use an extruder having a vent hole capable of reducing the pressure to atmospheric pressure or lower. By using an extruder with a vent, unreacted materials, by-products such as methanol, or monomers can be easily removed, and the breaking strength of a molded article containing the acrylic resin (A) tends to be improved.

For the cyclic structure-forming reaction, in place of an extruder, a reactor for high viscosity, for example, a horizontal twin-screw reaction apparatus, such as a Vyborac produced by Sumitomo Heavy Industries, Ltd., or a vertical twin-screw stirring tank, such as a Super Blend, can also be suitably used.

During the cyclic structure-forming reaction, a carboxy group may be produced as a by-product in the acrylic resin (A). The carboxy group may be converted into an ester group by, for example, an esterifying agent or a catalyst as necessary. This can reduce foaming of the resin during melt molding. The ester group may vary depending on the esterifying agent or catalyst used but preferably contains a methyl methacrylate unit, and more preferably contains both a methyl methacrylate unit and an ethyl methacrylate unit, from the viewpoint of reduction in resin melt viscosity during melt molding, reactivity of esterification, and heat resistance of the resin after esterification.

Examples of esterifying agents include dimethyl carbonate, diethyl carbonate, 2,2-dimethoxypropane, dimethyl sulfoxide, triethyl orthoformate, trimethyl orthoacetate, trimethyl orthoformate, diphenyl carbonate, dimethyl sulfate, methyl toluenesulfonate, methyl trifluoromethylsulfonate, methyl acetate, methanol, ethanol, methyl isocyanate, p-chlorophenyl isocyanate, dimethylcarbodiimide, dimethyl-tert-butyl silyl chloride, isopropenyl acetate, dimethylurea, tetramethylammonium hydroxide, dimethyldiethoxysilane, tetra-n-butoxysilane, dimethyl(trimethylsilane)phosphite, trimethyl phosphite, trimethyl phosphate, tricresyl phosphate, diazomethane, ethylene oxide, propylene oxide, cyclohexene oxide, 2-ethylhexyl glycidyl ether, phenyl glycidyl ether, benzyl glycidyl ether, and the like. These may be used singly or in a combination of two or more. Among these esterifying agents, dimethyl carbonate is preferable from the viewpoint of cost, reactivity, etc.

The amount of the esterifying agent can be, for example, set so that the acrylic resin (A) has a desired acid value.

In addition to the esterifying agent, a catalyst can be used together. The type of catalyst is not particularly limited, and examples include amine-based compounds, such as trimethylamine, triethylamine, monomethyldiethylamine, and dimethylmonoethylamine. Among these, triethylamine is preferable from the viewpoint of cost, reactivity, etc.

Light Absorber (B)

Examples of the light absorber (B) used together with the acrylic resin (A) include dyes (organic and inorganic), pigments (organic and inorganic), and the like. Among these, from the viewpoint of reducing the dependence of the transmittance on the incident angle, it is generally preferable to use a dye that reflects light less diffusely, rather than a pigment that diffusely reflects light on the particle surface. These light absorbers may be used singly or in a combination of two or more.

Examples of dyes include azo dyes, anthraquinone dyes, indigoid dyes, phthalocyanine dyes, carbonium dyes, quinonimine dyes, methine dyes, quinoline dyes, nitro dyes, nitroso dyes, benzoquinone dyes, naphthoquinone dyes, naphthalimide dyes, perinone dyes, and the like. Among these, oil-soluble dyes are preferable because they can be easily dispersed uniformly in the resin composition. Anthraquinone dyes, azoanthraquinone dyes, disazo dyes are more preferable, and anthraquinone dyes are particularly preferable. The anthraquinone dye preferably comprises at least one member selected from the group consisting of Solvent Yellow 163, Disperse Violet 28, Solvent Violet 36, Solvent Blue 97, Solvent Green 28, Solvent Green 3, and Disperse Blue 60.

Examples of pigments include organic pigments, such as azo pigments (oil-soluble azo pigments and insoluble azo pigments), polycyclic pigments, polycyclic pigments (phthalocyanine pigments), threne pigments, quinacridone pigments, dioxazine pigments, and isoindoline pigments; inorganic pigments, such as titanium oxide, iron oxide, chromium oxide, carbon black, ultramarine, barium sulfate, calcium carbonate, zinc oxide, lead sulfate, titanium black, and synthetic iron black; and the like.

In an embodiment, the acrylic resin composition of the present invention may contain, in addition to an anthraquinone dye, a combination of multiple other colorants as the light absorber (B). For example, a combination of an anthraquinone dye, a pigment, and a pigment; a combination of an anthraquinone, a pigment, and a dye; or a combination of an anthraquinone dye, a dye, and a dye may be used, and it is preferable to use a combination of an anthraquinone dye, a dye, and a dye. Combining multiple dyes is preferable because it can suppress or block light of a desired wavelength and provide good light transmission in the desired wavelength region.

The amount of the light absorber (B) contained in the resin composition of the present invention is preferably 0.1 to 5 mass%, more preferably 0.2 to 4 mass%, and even more preferably 0.3 to 3 mass%. An amount of 0.1 mass% or more is preferable because stable light blocking performance is achieved, and an amount of 5 mass% or less is preferable from the viewpoint of reducing production cost.

Other Additives and the Like

The acrylic resin composition of the present invention may contain additives, such as an antioxidant, a thermal degradation inhibitor, a UV absorber, a light stabilizer, a lubricant, a release agent, a polymer processing aid, an impact modifier, a light diffuser, a delusterant, and a phosphor, as long as the effects of the present invention are not impaired.

An antioxidant alone has an effect of preventing oxidative deterioration of resin in the presence of oxygen. Examples include phosphorus antioxidants, hindered phenolic antioxidants, thioether antioxidants, and the like. These antioxidants may be used singly or in a combination of two or more. Of these, phosphorus antioxidants and hindered phenolic antioxidants are preferable, and a combination of a phosphorus antioxidant and a hindered phenolic antioxidant is more preferable, from the viewpoint of the effect of preventing deterioration of optical properties due to coloration.

When a phosphorus antioxidant and a hindered phenolic antioxidant are used in combination, the mass ratio of the amount of the phosphorus antioxidant to the amount of the hindered phenolic antioxidant is preferably in the range of 1:5 to 2:1, and more preferably in the range of 1:2 to 1:1.

Preferred examples of phosphorus antioxidants include 2,2-methylenebis(4,6-di-t-butylphenyl)octyl phosphite (trade name: ADK STAB HP-10, produced by Adeka Corporation), tris(2,4-di-t-butylphenyl)phosphite (trade name: Irgafos 168, produced by BASF), 3,9-bis(2,6-di-tert-butyl-4-methylphenoxy)-2,4,8,10-tetraoxa-3,9-diphosphaspiro[5.5]undecane (trade name: ADK STAB PEP-36, produced by Adeka Corporation), and the like.

Preferred examples of hindered phenolic antioxidants include pentaerythrityl-tetrakis[3-(3,5-di-t-butyl-4-hydroxyphenyl)propionate] (trade name: Irganox 1010, produced by BASF), octadecyl-3-(3,5-di-t-butyl-4-hydroxyphenyl) propionate (trade name: Irganox 1076, produced by BASF), and the like.

Thermal degradation inhibitors can prevent thermal degradation of resin by trapping polymer radicals generated upon exposure to high heat in a substantially oxygen-free state.

Preferred examples of thermal degradation inhibitors include 2-t-butyl-6-(3'-t-butyl-5'-methyl-hydroxybenzyl)-4-methylphenyl acrylate (trade name: Sumilizer GM, produced by Sumitomo Chemical Co., Ltd.), 2,4-di-t-amyl-6-(3',5'-di-t-amyl-2'-hydroxy-$\alpha$-methylbenzyl)phenyl acrylate (trade name: Sumilizer GS, produced by Sumitomo Chemical Co., Ltd.), and the like.

UV absorbers are compounds having the ability to absorb ultraviolet rays. UV absorbers are compounds that are said to have the function of mainly converting light energy into heat energy.

Examples of UV absorbers include benzophenones, benzotriazoles, triazines, benzoates, salicylates, cyanoacrylates, oxalic acid anilides, malonic acid esters, formamidines, and the like. These may be used singly or in a combination of two or more. Among these, benzotriazoles, triazines, or UV absorbers having a maximum value $\varepsilon_{max}$ of the molar absorbance coefficient at a wavelength of 380 to 450 nm of 1200 $dm^3 \cdot mol^{-1} cm^{-1}$ or less are preferable.

Light stabilizers are compounds that are said to have the function of mainly capturing radicals that are formed due to oxidation by light, and preferred examples include hindered amines, such as compounds having a 2,2,6,6-tetraalkylpiperidine skeleton.

Examples of lubricants include stearic acid, behenic acid, stearic acid amide, methylene bisstearamide, hydroxystearic acid triglyceride, paraffin wax, ketone wax, octyl alcohol, and hydrogenated oil.

Examples of release agents include higher alcohols, such as cetyl alcohol and stearyl alcohol; glycerin higher fatty acid esters, such as stearic acid monoglyceride and stearic acid diglyceride; and the like. In the present invention, it is preferable to use a higher alcohol and a glycerin fatty acid monoester in combination as a release agent. When a higher alcohol and a glycerin fatty acid monoester are used in combination, the ratio is not particularly limited, and the mass ratio of the amount of the higher alcohol to the amount of the glycerin fatty acid monoester is preferably in the range of 2.5:1 to 3.5:1, and more preferably in the range of 2.8:1 to 3.2:1.

Polymer processing aids are polymer particles with a particle size of 0.05 to 0.5 $\mu$m that can usually be produced by the emulsion polymerization method. The polymer particles may be single-layer particles comprising a polymer having a single composition ratio and a single intrinsic viscosity, or may be multilayer particles comprising two or more polymers that are different in composition ratio or intrinsic viscosity. Among these, preferable examples include particles having a two-layer structure comprising a polymer layer having a low intrinsic viscosity as an inner layer and a polymer layer having a high intrinsic viscosity of 5 dl/g or more as an outer layer. Polymer processing aids preferably have an intrinsic viscosity of 3 to 6 dl/g. When the intrinsic viscosity is too small, the effect of improving moldability tends to be low. When the intrinsic viscosity is too large, molding processability of the resin composition tends to decrease. Specific examples include Metablen P series produced by Mitsubishi Rayon Co., Ltd., and Paraloid series produced by Rohm & Haas Co., The Dow Chemical Company, and Kureha Chemical Industry Co., Ltd. The amount of the polymer processing aid to be incorporated into a film or sheet is preferably 0.1 parts by mass or more and 5 parts by mass or less, based on the acrylic resin. When the amount of the polymer processing aid is less than 0.1 parts by mass, excellent processing characteristics cannot be obtained. When the amount of the polymer processing aid is more than 5 parts by mass, problems such as deterioration of surface properties occur.

Examples of impact modifiers include core-shell modifiers containing acrylic rubber or diene rubber as a core layer component, modifiers containing a plurality of rubber particles, and the like.

Examples of light diffusers and delusterants include glass fine particles, polysiloxane crosslinked fine particles, crosslinked polymer fine particles, talc, calcium carbonate, barium sulfate, and the like.

Examples of phosphors include fluorescent pigments, fluorescent dyes, fluorescent whitening dyes, fluorescent brightening agents, fluorescent bleaching agents, and the like.

The total amount of antioxidant, thermal degradation inhibitor, UV absorber, infrared radiation absorber, light stabilizer, lubricant, release agent, polymer processing aid, impact modifier, light diffuser, delusterant, and phosphor that can be contained in the resin composition of the present invention is preferably 7 mass% or less, and more preferably 5 mass% or less.

The acrylic resin composition of the present invention may comprise other polymers as long as the effects of the present invention are not impaired. Examples of other polymers include polyolefin resins, such as polyethylene, polypropylene, polybutene-1, poly-4-methylpentene-1, and polynorbornene; ethylene ionomers; styrene resins, such as polystyrene, styrenemaleic anhydride copolymers, high-impact polystyrene, AS resin, ABS resin, AES resin, AAS resin, ACS resin, and MBS resin; methyl methacrylate polymers and methyl methacrylate-styrene copolymers, other than acrylic copolymers (A); polyester resins, such as polyethylene terephthalate and polybutylene terephthalate; polyamides, such as nylon 6, nylon 66, and polyamide elastomers; polyvinyl chloride, polyvinylidene chloride, polyvinyl alcohol, ethylene-vinyl alcohol copolymers, polyacetal, polyvinylidene fluoride, polyurethane, phenoxy resins, modified polyphenylene ether, polyphenylene sulfide, silicone-modified resins; silicone rubbers; styrene thermoplastic elastomers, such as SEPS, SEBS, and SIS; olefin rubbers, such as IR, EPR, and EPDM; and the like. The amount of such other polymers that can be contained in the acrylic resin composition of the present invention is preferably 10 mass% or less, more preferably 5 mass% or less, and most preferably 0 mass%.

Method for Producing Acrylic Resin Composition

The method for producing the acrylic resin composition of the present invention is not particularly limited. For example, a method of melt-kneading the acrylic resin (A) and the light absorber (B) may be used. During melt kneading, other polymers, additives, and the like may be mixed, if necessary, the acrylic resin (A) may be first mixed with other polymers and additives and then mixed with the light absorber (B), the light absorber (B) may be first mixed with other

polymers and additives and then mixed with the acrylic resin (A), or other methods may be used. Kneading can be performed with a known mixing apparatus or kneading apparatus, such as a kneader-ruder, an extruder, a mixing roll, or a Banbury mixer. Of these, a twin-screw extruder is preferred.

The acrylic resin composition of the present invention may be prepared in the form of pellets or the like for increasing convenience during storage, transportation, or molding.

Physical Properties

The deflection temperature under load can be used as a criterion for the dimensional stability of the acrylic resin composition of the present invention. The acrylic resin composition of the present invention has a deflection temperature under load of 110°C or more, and preferably 115°C or more, at a load of 1.8 MPa, as measured in accordance with JIS K 7191. Since the acrylic resin composition of the present invention has a deflection temperature under load of 110°C or more, the heat resistance of a molded article comprising the acrylic resin composition of the present invention can be increased; for example, even when a molded article comprising the acrylic resin composition of the present invention is used for an automobile sensor application in which a high-temperature environment is expected, the dimensional stability is good, which is preferable. In the present specification, the deflection temperature under load is a value measured based on a method described in the Examples below.

Rockwell hardness can be used as a criterion for the scratch resistance of the acrylic resin composition of the present invention. When the acrylic resin composition of the present invention is formed into a 3 mm thick molded article, the surface hardness of the molded article is preferably 70 or more, more preferably 80 or more, and particularly preferably 90 or more, in terms of Rockwell hardness measured in accordance with JIS K 7202. A Rockwell hardness of 70 or more is preferable because the molded article comprising the acrylic resin composition of the present invention is less likely to deform and is less likely to be scratched. In the present specification, Rockwell hardness is a value measured based on a method described in the Examples below. In the present invention, the acrylic resin composition being one in which, when the acrylic resin composition is formed into a 3 mm thick molded article, the surface hardness of the molded article is 70 or more in terms of Rockwell hardness refers to an acrylic resin composition that satisfies the above Rockwell hardness when formed into a 3 mm thick molded article, and is not limited to an acrylic resin composition that is actually formed into a 3 mm molded article.

The optical properties of the molded article comprising the acrylic resin composition of the present invention when the molded article is a 1 mm thick molded article, or when calculated in terms of a thickness of 1 mm, satisfy all of the following conditions (i) to (v):

(i) a maximum transmittance of 10% or less when light with a wavelength of 380 nm to 700 nm is incident on the molded article at an incident angle of 0°;
(ii) a minimum transmittance of 85% or more when light with a wavelength of 850 nm to 950 nm is incident on the molded article at an incident angle of 0°;
(iii) an average transmittance of 85% or more when light with a wavelength of 1500 nm to 1600 nm is incident on the molded article at an incident angle of 0°;
(iv) 0.9≤(transmittance when light with a wavelength of 900 nm is incident on the molded article at an incident angle of 60°)/(transmittance when light with a wavelength of 900 nm is incident on the molded article at an incident angle of 0°)≤1.1; and
(v) 0.9≤(transmittance when light with a wavelength of 1550 nm is incident on the molded article at an incident angle of 60°)/(transmittance when light with a wavelength of 1550 nm is incident on the molded article at an incident angle of 0°)≤1.1.

The acrylic resin composition of the present invention is not limited to an acrylic resin composition that is actually formed into a molded article, and may be an acrylic resin composition that satisfies all of the conditions (i) to (v) when formed into a molded article.

In the present specification, "maximum transmittance" refers to the maximum value when the transmittance is measured in the wavelength range in 1 nm increments. In the present specification, "minimum transmittance" refers to the minimum value when the transmittance is measured in the wavelength range in 1 nm increments. In the present specification, "average transmittance" refers to the arithmetic mean value of the transmittance measured in the wavelength range in 1 nm increments. In the present specification, transmittance is a value measured based on a method described in the Examples below.

Regarding (i) above, the maximum transmittance at a wavelength of 380 nm to 700 nm at an incident angle of 0° is 10% or less, and preferably 5% or less, in the 1 mm thick molded article or when calculated in terms of a molded article thickness of 1 mm. In optical sensor devices using near-infrared rays, it is important to block out light of unnecessary wavelengths, especially visible light, in order for the sensing function to work accurately. Satisfying condition (i) can reduce

noise in use and improve the characteristics of optical sensor devices.

Regarding (ii) above, since near-infrared sensors transmit and receive near-infrared rays, the minimum transmittance at a wavelength of 850 nm to 950 nm at an incident angle of 0° is 85% or more, preferably 87% or more, and more preferably 90% or more, in the 1 mm thick molded article or when calculated in terms of a molded article thickness of 1 mm.

Regarding (iii) above, since near-infrared sensors transmit and receive near-infrared rays, the average transmittance at a wavelength of 1500 nm to 1600 nm at an incident angle of 0° is 85% or more, preferably 87% or more, and more preferably 90% or more, in the 1 mm thick molded article or when calculated in terms of a molded article thickness of 1 mm.

Regarding (iv) above, downsizing of sensors tends to shorten the distance between the cover material and the near-infrared ray transmission and reception. Thus, the incident angle at the time of near-infrared ray transmission and reception increases, and small dependence on the incident angle is required to improve the accuracy of sensors. Therefore, the transmittance at a wavelength of 900 nm in the 1 mm molded article or when calculated in terms of a molded article thickness of 1 mm is such that the angle dependence is within the following range:
0.9≤(transmittance when light with a wavelength of 900 nm is incident on the molded article at an incident angle of 60°)/(transmittance when light with a wavelength of 900 nm is incident on the molded article at an incident angle of 0°)≤1.1.

Similarly, regarding (v) above, the transmittance at a wavelength of 1550 nm in the 1 mm thick molded article or when calculated in terms of a molded article thickness of 1 mm is such that the angle dependence is within the following range: 0.9≤(transmittance when light with a wavelength of 1550 nm is incident on the molded article at an incident angle of 60°)/(transmittance when light with a wavelength of 1550 nm is incident on the molded article at an incident angle of 0°)≤1.1.

Since the molded article comprising the acrylic resin composition of the present invention satisfies the above conditions (i) to (v) regarding the visible light blocking properties and near-infrared light transmission, it can sufficiently cut visible light noise and can sufficiently transmit near-infrared light. In addition, since the dependence on the incident angle is low, the acrylic resin composition of the present invention can be suitably used for sensor protection covers.

Moreover, since the use of infrared lasers with wavelengths of 1064 nm and 1310 **nm,** which are used for existing measurement, in LiDAR is being considered, the average transmittance at a wavelength of 1014 nm to 1114 nm at an incident angle of 0° is preferably 85% or more, and the average transmittance at a wavelength of 1260 nm to 1360 nm at an incident angle of 0° is preferably 85% or more, in the 1 mm thick molded article or when calculated in terms of a molded article thickness of 1 mm.

## Molded Article

The molded article of the present invention comprises the acrylic resin composition of the present invention. The method for producing the molded article of the present invention is not particularly limited. Examples include melt molding methods, such as a T-die method (a lamination method, a coextrusion method, etc.), inflation method (a coextrusion method etc.), a compression molding method, a blow molding method, a calender molding method, a vacuum molding method, an injection molding method (an insert method, a double molding method, a press method, a core-back method, a sandwich method, etc.), and a solution casting method. The temperature of the resin composition to be melt-molded is preferably set to 180 to 280°C, and more preferably 200 to 250°C.

Since the molded article comprising the acrylic resin composition of the present invention can sufficiently cut visible light noise, can sufficiently transmit near-infrared light, has low dependence on the incident angle, and has high dimensional stability and high scratch resistance, the molded article can be suitably used as a sensor protection cover. For example, the optical component can be particularly suitably used as a protection cover for 3D sensors and distance measurement sensors that measure the shape and distance of an object.

## Examples

The present invention is described in more detail below with reference to Examples and Comparative Examples; however, the present invention is not limited to the Examples. The values of physical properties etc. were measured by the following methods.

## Triad Syndiotacticity (rr)

The acrylic resin (A) obtained in each of the Examples and Comparative Examples was subjected to $^{1}$H-NMR measurement. A value obtained by measuring an area (X) of the region from 0.6 to 0.95 ppm and an area (Y) of the region from 0.6 to 1.35 ppm, with the peak of TMS being taken as 0 ppm and making a calculation using the formula $(X/Y) \times 100$ was defined as triad syndiotacticity (rr) (%).

Apparatus: nuclear magnetic resonance apparatus (Ultrashield 400 Plus, produced by Bruker)
Solvent: deuterated chloroform
Measurement nuclide: $^{1}H$
Measurement temperature: room temperature
Cumulative number: 64 times

Glass Transition Temperature

A DSC curve was measured with a differential scanning calorimeter (DSC-50, model number, produced by Shimadzu Corporation) in accordance with JIS K 7121 under conditions in which the resin composition obtained in each Example was heated to 230°C, cooled to room temperature, and then heated from room temperature to 230°C at 10°C/min. The glass transition temperature at the midpoint determined from the DSC curve, measured at the time of the second temperature rise, was defined as the glass transition temperature (Tg) in the present invention.

Weight Average Molecular Weight and Molecular Weight Distribution

Mw and the molecular weight distribution were calculated by measuring a chromatogram by gel permeation chromatography (GPC) under the following conditions.
GPC apparatus: HLC-8320, produced by Tosoh Corporation
Detector: differential refractive index detector
Column: two TSKgel SuperMultipore HZM-M columns and a SuperHZ4000 column produced by Tosoh Corporation were connected in series
Eluent: tetrahydrofuran
Eluent flow rate: 0.35 ml/min
Column temperature: 40°C
Calibration curve: prepared using data of ten standard polymethyl methacrylates

Imidization Rate

$^{1}H$-NMR measurement of resin was performed using $^{1}H$-NMR (trade name: Ultrashield 400 Plus, produced by Bruker), and a value determined according to the following formula using an area A of a peak derived from an O-$CH_3$ group in the methyl methacrylate unit near 3.5 to 3.8 ppm and an area B of a peak derived from an N-$CH_3$ group in the N-methylglutarimide unit near 3.0 to 3.3 ppm was defined as the imidization rate (mol%).

$$\text{Imidization rate (mol\%)} = [B/(A + B)] \times 100$$

The mass% of the imide unit was calculated from the imidization rate (mol%).

Rockwell Hardness

The resin compositions obtained in the Examples were injection-molded at 230°C to obtain test specimens having a size of 50 mm × 50 mm × 3.0 mm (thickness). The hardness of each test specimen was measured in accordance with JIS K 7202 (M scale).

Deflection Temperature under Load

The resin compositions obtained in the Examples were injection-molded at 230°C to obtain test specimens having a size of 80 mm × 10 mm × 4.0 mm (thickness). The deflection temperature under load of each test specimen was measured in accordance with JIS K 7191 (1.8 MPa).

Transmittance

The resin compositions obtained in the Examples were injection-molded at 230°C to obtain test specimens having a size of 100 mm × 100 mm × 1.0 mm (thickness). The spectral transmittance was measured with a spectrophotometer (U4100, produced by Hitachi High-Tech Science Corporation).

Production Example 1: Production of Acrylic Resin (A-1)

The inside of an autoclave equipped with a stirrer and a collecting tube was purged with nitrogen. 100 parts by mass of purified methyl methacrylate, 0.0052 parts by mass of 2,2'-azobis(2-methylpropionitrile) (hydrogen abstraction ability: 1%, 1-hour half-life temperature: 83°C), and 0.26 parts by mass of n-octyl mercaptan were added to the autoclave and stirred to obtain a raw material liquid. Nitrogen was introduced into the raw material liquid to remove oxygen dissolved in the raw material liquid.

The raw material liquid was poured into a tank reactor connected to the autoclave by a pipe up to 2/3 of the reactor volume. The raw material liquid-feeding port to the tank reactor and the reaction liquid-discharging port from the tank reactor were closed, the temperature was maintained at 140°C, and a polymerization reaction was initiated batchwise. When the polymerization conversion rate reached 55 mass%, the raw material liquid-feeding port to the tank reactor and the reaction liquid-discharging port from the tank reactor were opened, the raw material liquid was supplied from the autoclave to the tank reactor at such a flow rate that the average residence time became 150 minutes, the reaction liquid was withdrawn from the tank reactor at a flow rate corresponding to the flow rate of the raw material liquid fed, the temperature of the reaction liquid in the reactor was maintained at 140°C, and the polymerization reaction was switched to a continuous flow mode. After switching, the polymerization conversion rate in a steady state was 55 mass%.

The reaction liquid withdrawn from the tank reactor in a steady state was fed into a multitubular heat exchanger at an internal temperature of 230°C at such a flow rate that the average residence time became 2 minutes, and heated. The heated reaction liquid was then introduced into a flash evaporator, and volatile matter containing unreacted monomers as a main component was removed to obtain a molten resin. The molten resin from which volatile matter had been removed was fed into a twin-screw extruder at an internal temperature of 260°C and extruded into the form of a strand, and the strand was cut with a pelletizer to obtain an acrylic resin (A-1) having a weight average molecular weight Mw of 82000, a ratio of the weight average molecular weight to the number average molecular weight, i.e., an Mw/Mn ratio, of 1.9, a triad syndiotacticity (rr) of 51%, and a glass transition temperature of 118°C (Table 1).

Production Example 2: Production of Acrylic Resin (A-2)

The inside of a 5 L glass reaction vessel equipped with a stirring blade and a three-way cock was purged with nitrogen. In the reaction vessel, 1600 g of toluene, 2.49 g (10.8 mmol) of 1,1,4,7,10,10-hexamethyltriethylenetetramine, 53.5 g (30.9 mmol) of a 0.45 M solution of isobutylbis(2,6-di-tert-butyl-4-methylphenoxy)aluminum in toluene, and 7.07 g (11.8 mmol) of a 1.3 M solution of sec-butyllithium (solvent: cyclohexane (95%), n-hexane (5%)) were placed at 23°C. 550 g of purified methyl methacrylate was added dropwise to the reaction vessel with stirring at 15°C over a period of 30 minutes. After the completion of dropwise addition, the mixture was stirred at 25°C for 90 minutes. At this point, the polymerization conversion rate of methyl methacrylate was 100%. The resulting solution was diluted with addition of 1500 g of toluene. Subsequently, the diluted solution was poured in 100 kg of methanol to obtain a precipitate. The precipitate was dried at 80°C and 140 Pa for 24 hours to obtain an acrylic resin (A-2) having a weight average molecular weight Mw of 70000, a ratio of the weight average molecular weight to the number average molecular weight, i.e., Mw/Mn ratio, of 1.1, a triad syndiotacticity (rr) of 74%, and a glass transition temperature of 131°C (Table 1).

Production Example **3:** Production of Imidized Acrylic Resin (A-3) Precursor Polymer

68.0 parts by mass of purified methyl methacrylate (MMA), 28.0 parts by mass of $\alpha$-methylstyrene ($\alpha$MSt), 7.0 parts by mass of styrene (St), 0.05 parts by mass of 2,2'-azobis(2-methylpropionitrile) (AIBN), and 0.01 parts by mass of n-octyl mercaptan (n-OM) were placed in an autoclave equipped with a stirrer and uniformly dissolved to obtain a raw material for polymerization. Nitrogen gas was blown into the reactant to remove dissolved oxygen up to 3 ppm. Subsequently, the inside of a continuous-flow tank reactor equipped with a brine-cooling condenser was purged with nitrogen gas. The raw material for polymerization was continuously supplied to the tank reactor at a constant flow rate such that the average residence time was 3.0 hours to perform bulk polymerization at a polymerization temperature of 140°C, and a liquid containing a precursor polymer was continuously discharged from the tank reactor. The pressure in the tank reactor was controlled by a pressure regulation valve connected to the brine-cooling condenser. The polymerization conversion rate resulted as shown in Table **1.** Subsequently, the liquid discharged from the reactor was heated to 210°C and supplied to a twin-screw extruder controlled to 230°C. In the twin-screw extruder, volatile matter containing unreacted monomers as a main component was separated and removed, and the precursor polymer was extruded into the form of a strand. The strand was cut with a pelletizer to obtain a precursor polymer.

Imidization

A twin-screw extruder equipped with a transport unit, a melt-kneading unit, a volatilization unit, and a discharge unit, and set to a screw rotation speed of 150 rpm and a temperature of 210 to 270°C (trade name: TEX30α-77AW-3V, produced by The Japan Steel Works, Ltd.), was charged in its transport unit with the precursor polymer at a rate of 15 kg/hr. In the melt-kneading unit with the kneading block attached thereto, the amount of monomethylamine was adjusted so that the content of the glutarimide-derived structural unit was 61 wt% (48 mol%), and monomethylamine was injected from an additive-feeding port of the twin-screw extruder, thereby allowing a reaction between the precursor polymer and monomethylamine to proceed. The melt-kneading unit was mostly composed of kneading disks and had a sealing element attached at each end. In the volatilization unit, by-products and excess monomethylamine were volatilized from the molten resin that passed through the melt-kneading unit and discharged through multiple vents.

The molten resin extruded into the form of a strand from a die provided at the end of the discharge unit of the twin-screw extruder was cooled in a water tank and then cut with a pelletizer to obtain a pelletized imidized acrylic resin (A-3) (Table 1).

Table 1

| | Acrylic resin | | |
|---|---|---|---|
| | A-1 | A-2 | A-3 |
| Content of MMA unit (mass%) | 100 | 100 | 30 |
| Content of structural unit (O) (mass%) | - | - | St: 8, αMSt: 16 |
| Content of structural unit (R) (mass%) | - | - | 46 |
| Mw | 82000 | 70000 | 87000 |
| Mw/Mn | 1.9 | 1.1 | 2 |
| rr (%) | 51 | 74 | - |
| Tg (°C) | 118 | 131 | 140 |

Production Example 4

65 parts by mass of purified methyl methacrylate (MMA), 28 parts by mass of α-methylstyrene (αMSt), 7 parts by mass of styrene (St), 100 ppm of n-octyl mercaptan (n-OM) as a chain transfer agent, and 1000 ppm of di-tert-dodecyl disulfide (DDS) were placed in an autoclave equipped with a stirrer and a collecting tube and mixed uniformly. 500 ppm of 2,2'-azobis(2-methylpropionitrile) (AIBN) as a polymerization initiator was added thereto, and the mixture was uniformly mixed to obtain a raw material for polymerization. Nitrogen gas was blown into the raw material for polymerization so that the concentration of dissolved oxygen was 3 ppm. The composition of the raw material for polymerization is also referred to as the "feed composition."

Subsequently, a continuous-flow tank reactor equipped with a brine-cooling condenser was prepared, and the inside of the reactor was purged with nitrogen gas. The raw material for polymerization was continuously supplied to the reactor at a constant flow rate such that the average residence time was 3.0 hours to perform bulk polymerization at a polymerization temperature of 140°C, and a resin solution containing a methacrylic resin as a reaction product was continuously discharged from the reactor. The pressure in the reactor was controlled by a pressure regulation valve connected to the brine-cooling condenser. The polymerization conversion rate was 37%.

Prepared was a twin-screw extruder that has a resin-feeding port for feeding the resin solution discharged from the reactor and a die including a resin-discharging port for discharging the produced resin and further has a first vent (also referred to as a "rear vent") located relatively close to the resin-feeding port, a second vent (also called a "front vent") located relatively close to the resin-discharging port, and an additive-feeding port located between the second vent (front vent) and the resin-discharging port.

The resin solution discharged from the reactor was heated using a heat exchanger and fed into the extruder through the resin-feeding port. The set temperature of the heat exchanger was 200°C, and the set temperature of the cylinder of the extruder was 245°C. Volatile matter containing unreacted monomers as a main component was flash-evaporated from the resin solution fed into the cylinder of the extruder and discharged from the first vent (rear vent). Further, the resin was conveyed in the axial direction of the cylinder by the screws, and the volatile matter that evaporated during this was discharged from the second vent (front vent). The screw rotation speed was 164 rpm. The resin was extruded into the form of a strand from the resin-discharging port of the extruder. The molten resin temperature in the die (also referred to as the "die resin temperature") was 244°C. The obtained strand was cut with a pelletizer to obtain pellets of

a methacrylic resin containing a methacrylic copolymer (A-6) containing a methyl methacrylate (MMA) unit and an α-methylstyrene (αMSt) unit.

Light Absorbers (B) Used in Examples

Macrolex (registered trademark) Green G: anthraquinone dye (produced by Lanxess)
Macrolex (registered trademark) Green 5B: anthraquinone dye (produced by Lanxess)
Macrolex (registered trademark) Violet 3R: anthraquinone dye (produced by Lanxess)
Macrolex (registered trademark) Yellow 3G: pyrazolone dye (produced by Lanxess)

Example 1

1000 g of the acrylic resin (A-1) was mixed with 5 g of Macrolex Green G and 1 g of Macrolex Violet 3R as dyes, and the mixture was melt-kneaded at a cylinder heating temperature of 270°C with a twin-screw extruder (trade name: KZW20TW-45MG-NH-600, produced by Technovel Corporation) to obtain a resin composition (C-1) in the form of pellets.
Subsequently, 1006 g of the resin composition (C-1) in the form of pellets was mixed with 4000 g of the acrylic resin (A-2) in the form of pellets, and the mixture was melt-kneaded at a cylinder heating temperature of 270°C with a twin-screw extruder (trade name: KZW20TW-45MG-NH-600, produced by Technovel Corporation) to obtain a resin composition in the form of pellets.
Thereafter, the resin composition was injection-molded with an injection molding machine (M-100C, produced by Meiki Co., Ltd.) under molding conditions of a cylinder temperature of 230°C and a mold temperature of 50°C to obtain a molded article. Table 2 shows the evaluation results.

Examples 2 to 5 and Comparative Examples 1 to 2

The same procedure as in Example 1 was performed, except that the resins and light absorbers (B) used were as shown in Table 2. Tables 2 and 3 show the evaluation results.

Comparative Example 3

The same procedure as in Example 1 was performed, except that polycarbonate produced by Covestro was used in place of the acrylic resin (A). Table 3 shows the evaluation results.

Comparative Example 4

The same procedure as in Example 1 was performed, except that the acrylic resin (A-1) was used in place of the precursor polymer in Production Example 3, imidization was performed, and an imidized acrylic resin (A-4) containing 30 mass% of an MMA unit and 70 mass% of a glutarimide unit was used. Table 3 shows the evaluation results.

Comparative Example 5

The same procedure as in Example 1 was performed, except that an imidized acrylic resin (A-5) containing 15 mass% of an MMA unit and 85 mass% of a glutarimide unit was used in place of the imidized acrylic resin (A-4) used in Comparative Example 4. Table 3 shows the evaluation results.

Table 2

| | | Unit | Example 1 | Example 2 | Example 3 | Example 4 | Example 5 |
|---|---|---|---|---|---|---|---|
| Resin | Acrylic resin (A-1) | Parts by mass | 200 | 200 | 200 | 200 | 200 |
| | Acrylic resin (A-2) | Parts by mass | 800 | | 800 | | |
| | Imidized acrylic resin (A-3) | Parts by mass | | 800 | | 800 | |
| | Polycarbonate | Parts by mass | | | | | |
| | Imidized acrylic resin (A-4) | Parts by mass | | | | | |
| | Imidized acrylic resin (A-5) | Parts by mass | | | | | |
| | Acrylic resin (A-6) | Parts by mass | | | | | 800 |
| Light absorber (B) | Macrolex Green G | Parts by mass | 5 | 5 | 0.2 | 0.2 | 5 |
| | Macrolex Green 5B | Parts by mass | 0 | 0 | 4 | 4 | 0 |
| | Macrolex Violet 3R | Parts by mass | 1 | 1 | 0.8 | 0.8 | 1 |
| | Macrolex Yellow 3G | Parts by mass | 0 | 0 | 0.4 | 0.4 | 0 |
| Physical properties | Deflection temperature under load | °C | 119 | 128 | 119 | 128 | 112 |
| | Rockwell hardness | - | 96 | 90 | 97 | 90 | 95 |

(continued)

| | | Unit | Example 1 | Example 2 | Example 3 | Example 4 | Example 5 |
|---|---|---|---|---|---|---|---|
| Optical properties | (i) Maximum transmittance at incident angle of 0° and wavelength of 380 nm to 700 nm | % | 0 | 0 | 0 | 0 | 0 |
| | (ii) Minimum transmittance at incident angle of 0° and wavelength of 850 to 950 nm | % | 91 | 90 | 91 | 90 | 90 |
| | (iii) Average transmittance at incident angle of 0° and wavelength of 1500 to 1600 nm | % | 90 | 88 | 90 | 88 | 90 |
| | (iv) Transmittance (incident angle: 60°; wavelength: 900 nmytransmittance (incident angle: 0°; wavelength: 900 nm) | - | 0.92 | 0.91 | 0.92 | 0.91 | 0.91 |
| | (v) Transmittance (incident angle: 60°; wavelength: 1550 nmytransmittance (incident angle: 0°; wavelength: 1550 nm) | - | 0.92 | 0.92 | 0.92 | 0.92 | 0.91 |
| | Average transmittance at incident angle of 0° and wavelength of 1014 to 1114 nm | % | 92 | 91 | 92 | 91 | 92 |
| | Average transmittance at incident angle of 0° and wavelength of 1260 to 1360 nm | % | 89 | 89 | 89 | 89 | 90 |

Table 3

| | | Unit | Comp. Ex. 1 | Comp. Ex. 2 | Comp. Ex. 3 | Comp. Ex. 4 | Comp. Ex. 5 |
|---|---|---|---|---|---|---|---|
| Resin | Acrylic resin (A-1) | Parts by mass | 1000 | 1000 | | | |
| | Acrylic resin (A-2) | Parts by mass | | | | | |
| | Imidized acrylic resin (A-3) | Parts by mass | | | | | |
| | Polycarbonate | Parts by mass | | | 1000 | | |
| | Imidized acrylic resin (A-4) | Parts by mass | | | | 1000 | |
| | Imidized acrylic resin (A-5) | Parts by mass | | | | | 1000 |
| | Acrylic resin (A-6) | Parts by mass | | | | | |
| Light absorber (B) | Macrolex Green G | Parts by mass | 0 | 5 | 5 | 5 | 5 |
| | Macrolex Green 5B | Parts by mass | 0 | 0 | 0 | 0 | 0 |
| | Macrolex Violet 3R | Parts by mass | 0 | 1 | 1 | 1 | 1 |
| | Macrolex Yellow 3G | Parts by mass | 0 | 0 | 0 | 0 | 0 |
| Physical properties | Deflection temperature under load | °C | 106 | 106 | 136 | 132 | 149 |
| | Rockwell hardness | - | 90 | 90 | 49 | 80 | 80 |

(continued)

| | | Unit | Comp. Ex. 1 | Comp. Ex. 2 | Comp. Ex. 3 | Comp. Ex. 4 | Comp. Ex. 5 |
|---|---|---|---|---|---|---|---|
| Optical properties | (i) Maximum transmittance at incident angle of 0° and wavelength of 380 nm to 700 nm | % | 91 | 0 | 0 | 0 | 0 |
| | (ii) Minimum transmittance at incident angle of 0° and wavelength of 850 to 950 nm | % | 91 | 91 | 90 | 90 | 90 |
| | (iii) Average transmittance at incident angle of 0° and wavelength of 1500 to 1600 nm | % | 91 | 90 | 89 | 84 | 83 |
| | (iv) Transmittance (incident angle: 60°; wavelength: 900 nm)/transmittance (incident angle: 0°; wavelength: 900 nm) | - | 0.92 | 0.92 | 0.91 | 0.90 | 0.90 |
| | (v) Transmittance ((incident angle: 60°; wavelength: 1550 nm)/transmittance (incident angle: 0°; wavelength: 1550 nm) | - | 0.93 | 0.93 | 0.89 | 0.88 | 0.86 |
| | Average transmittance at incident angle of 0° and wavelength of 1014 to 1114 nm | % | 92 | 92 | 90 | - | - |
| | Average transmittance at incident angle of 0° and wavelength of 1260 to 1360 nm | % | 90 | 90 | 90 | - | - |

## Claims

**1.** An acrylic resin composition for sensor protection covers, comprising:

an acrylic resin (A); and
a light absorber (B),
wherein
the acrylic resin composition has a deflection temperature under load of 110°C or more, and
a 1 mm thick molded article comprising the acrylic resin composition has optical properties that satisfy all of the following conditions (i) to (v):

(i) a maximum transmittance of 10% or less when light with a wavelength of 380 nm to 700 nm is incident on the molded article at an incident angle of 0°;
(ii) a minimum transmittance of 85% or more when light with a wavelength of 850 nm to 950 nm is incident on the molded article at an incident angle of 0°;
(iii) an average transmittance of 85% or more when light with a wavelength of 1500 nm to 1600 nm is incident on the molded article at an incident angle of 0°;
(iv) 0.9≤(transmittance when light with a wavelength of 900 nm is incident on the molded article at an incident angle of 60°)/(transmittance when light with a wavelength of 900 nm is incident on the molded article at an incident angle of 0°)≤1.1; and
(v) 0.9≤(transmittance when light with a wavelength of 1550 nm is incident on the molded article at an incident angle of 60°)/(transmittance when light with a wavelength of 1550 nm is incident on the molded article at an incident angle of 0°)≤1.1.

**2.** The acrylic resin composition according to claim **1,** wherein when the acrylic resin composition is formed into a 3 mm thick molded article, the surface hardness of the molded article is 70 or more in terms of Rockwell hardness.

3. The acrylic resin composition according to claim 1, wherein the amount of the light absorber (B) is 0.01 mass% or more and 5 mass% or less based on the entire resin composition.

4. The resin composition according to claim 1, wherein the light absorber (B) is an anthraquinone dye.

5. The acrylic resin composition according to claim 1, wherein the acrylic resin (A) comprises an acrylic resin having a triad syndiotacticity (rr) of 70% or more.

6. The acrylic resin composition according to claim 1, wherein the acrylic resin (A) comprises a structural unit (R) having in its main chain at least one cyclic structure selected from the group consisting of an N-substituted or unsubstituted glutarimide unit, a glutaric anhydride unit, a maleimide unit, and a lactone unit.

7. A molded article comprising the acrylic resin composition according to claim 1.

8. The molded article according to claim 7, which is a sensor protection cover.

## INTERNATIONAL SEARCH REPORT

International application No.
**PCT/JP2023/034773**

### A. CLASSIFICATION OF SUBJECT MATTER

***C08L 33/06***(2006.01)i; ***C08K 5/00***(2006.01)i; ***G01S 7/03***(2006.01)i
FI: C08L33/06; C08K5/00; G01S7/03 246

According to International Patent Classification (IPC) or to both national classification and IPC

### B. FIELDS SEARCHED

Minimum documentation searched (classification system followed by classification symbols)

C08L33/06; C08K5/00; G01S7/03

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 60-188450 A (ASAHI KASEI KOGYO KK) 25 September 1985 (1985-09-25) entire text | 1-8 |
| A | JP 2008-214575 A (TORAY IND., INC.) 18 September 2008 (2008-09-18) entire text | 1-8 |
| A | JP 2021-42353 A (NIPPON SHOKUBAI CO., LTD.) 18 March 2021 (2021-03-18) entire text | 1-8 |
| P, A | JP 2023-104286 A (NIPPON SHOKUBAI CO., LTD.) 28 July 2023 (2023-07-28) entire text | 1-8 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **06 November 2023** | **05 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/034773**

| Patent document cited in search report | Publication date (day/month/year) | Patent family member(s) | Publication date (day/month/year) |
|---|---|---|---|
| JP 60-188450 A | 25 September 1985 | (Family: none) | |
| JP 2008-214575 A | 18 September 2008 | (Family: none) | |
| JP 2021-42353 A | 18 March 2021 | (Family: none) | |
| JP 2023-104286 A | 28 July 2023 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015184627 A
- JP S60139757 A
- WO 200510838 A1
- JP 2010254742 A
- JP 2008273140 A
- JP 2008274187 A
- JP 2007197703 A
- JP 2010096919 A
- JP S61026924 B
- JP H7042332 B
- JP H9100322 A
- JP 2001329021 A
- JP 2000230016 A
- JP 2001151814 A
- JP 2002120326 A
- JP 2002254544 A
- JP 2005146084 A
- JP H725859 B
- JP H11335432 A
- JP H693060 A


### Non-patent literature cited in the description


- Metablen P series. Mitsubishi Rayon Co., Ltd.
- Paraloid series. Rohm & Haas Co